# EUROPÄISCHE PATENTSCHRIFT

(11) **EP 0 767 315 B1**
(45) Veröffentlichungstag und Bekanntmachung des Hinweises auf die Patenterteilung: **28.11.2001**
(21) Anmeldenummer: 96113369.1
(22) Anmeldetag: 21.08.1996
(51) Int. Cl.: F16C 9/02

(54) **Kurbelwellenlagerung für eine Brennkraftmaschine**
Crankshaft bearing for a combustion engine
Palier de vilebrequin pour moteur à combustion

(30) Priorität: 06.10.1995 DE 19537191
(43) Veröffentlichungstag der Anmeldung: 09.04.1997
(60) Teilanmeldung: 00106769.3
(73) Patentinhaber: Dr.Ing.h.c. F. Porsche Aktiengesellschaft, 70435 Stuttgart (DE)
(72) Erfinder: Wüst, Johannes, 71287 Weissach-Flacht (DE)

(56) Entgegenhaltungen:
- EP-A- 0 038 560
- DE-C- 3 426 208
- US-A- 1 764 672
- PATENT ABSTRACTS OF JAPAN vol. 014, no. 030 (C-678), 19.Januar 1990 & JP 01 268843 A (MAZDA MOTOR CORP), 26.Oktober 1989,

## Beschreibung

Die Erfindung betrifft eine Kurbelwellenlagerung für eine Brennkraftmaschine nach der Gattung des Patentanspruches 1.

Eine derartige Kurbelwellenlagerung für eine Brennkraftmaschine ist beispielsweise aus der DE 34 26 208 C1 bekannt. Die darin beschriebene Kurbelwellenlagerung ist aus einem Kurbelgehäuse und einem Lagerdeckel gebildet. Das Kurbelgehäuse und der Lagerdeckel bestehen aus einem Leichtmetall bzw. einer Leichtmetallegierung, wobei zumindest in den Lagerdeckel ein eisenmetallischer Kern integriert ist. Dieser ist beim Herstellen des Lagerdeckels in einem Gießverfahren in das Leichtmetall bzw. die Leichtmetallegierung eingebettet. Der Lagerdeckel kann auch Bestandteil einer das Kurbelgehäuse versteifenden Brücke sein, die mehrere Lagerdeckel beinhaltet und ebenfalls aus Leichtmetall bzw. einer Leichtmetallegierung gefertigt, insbesondere gegossen ist. Der eisenmetallische Kern im Lagerdeckel hat zwei die Lagerschrauben aufnehmende Büchsen, zwischen denen sich ein Querteil erstreckt, in dem die eine Hälfte der Lagerbohrung für einen Kurbelwellenzapfen ausgebildet ist. Die Lagerverschraubung stützt sich dabei direkt an den Büchsen des e senmetallischen Kerns ab.

Der Erfindung liegt demgegenüber die Aufgabe zugrunde, eine gattungsgemäße Kurbelwellenlagerung so zu verbessern, daß eine hohe Festigkeit des Verbandes zwischen eisenmetallischem Kern (Einlegteil) und der dieses aufnehmenden Leichtmetallegierung (Umgußteil) sichergestellt ist, wobei gleichzeitig eine hohe Steifigkeit der gesamten Kurbelwellenlagerung bei geringem Gewicht gewährleistet werden soll. Darüberhinaus soll ein gleichmäßiges Ausdehnungsverhalten der Lagerbohrung in alle Richtungen und unter allen Betriebsbedingungen sichergestellt werden.

Diese Aufgabe wird erfindungsgemäß mit den kennzeichnenden Merkmalen des Hauptanspruches gelöst. Durch Ausgestaltung der beide Einlegteile als profilierte Formteile mit in den Umgußteilen verankerten Stegen, wobei die Stege mit Durchbrüchen und Verdickungen versehen sind, wird ein hochfester Verband mit dem umgebenden Umgußteil (Leichtmetallegierung) der Kurbelwellenlagerung bzw. des jeweiligen Lagerabschnittes sichergestellt. Die Ausbildung eines den jeweiligen Teil der Lagerbohrung umgebenden halbkreisförmigen Trägers gewährleistet ein gleichmäßiges Ausdehnungsverhalten und sichert ein hohes Maß an Lagerrundheit unter allen Betriebsbedingungen. Eine hohe Steifigkeit des Gesamtverbandes bei gleichzeitig geringem Gewicht ergibt sich, wenn die Einlegteile von den Lagerschrauben durchdrundgen werden und diese sich einerseits an einer äußeren Schraubfläche des Umgußteils des einen Lagerabschnittes abstützen und andererseits im Umgußteil des gegenüberliegenden Lagerabschnitt verschraubt sind. Die Einlegteile liegen dabei mit ihren Stirnseiten aneinander, so daß diese im verschraubten Zustand direkt gegeneinander verspannt sind. Damit können die Betriebskräfte auf vorteilhafte Weise aufgenommen und weitergeleitet werden.

Durch die hohe Festigkeit des Verbandes zwischen Einlegteil und umgebender Leichtmetallegierung und durch die Formgebung der Einlegteile wird eine sichere Kraftübertragung der Betriebskräfte ins Kurbelgehäuse sichergestellt, obwohl sich zwischen dem eisenmetallischen Werkstoff des Einlegteils und der dieses einbettenden Leichtmetallegierung keine innere Verbindung ergibt. Insbesondere durch die Ausbildung des halbkreisförmigen Trägers und die weitere Formgebung des Einlegteils wird dabei sichergestellt, daß die Fugen zwischen dem eisenmetallischen Einlegteil und der umgebenden Leichtmetallegierung nahezu ausschließlich auf Druck belastet werden.

Ein hohes Maß an Lagerrundheit und eine gleichmäßige Ausdehnung der Lagerbohrung bzw. des Einlegteils werden gewährleistet, wenn dieses zumindest teilweise einen annähernd T-förmigen Querschnitt hat, wobei der halbkreisförmige Träger den Quersteg bildet. Durch gezielte Abstimmung der Querschnitte und Massen des Einlegteils kann dabei sichergestellt werden, daß eine gleichmäßige radiale Ausdehnung unter allen Betriebsbedingungen und Betriebstemperaturen vorherrscht.

Die Festigkeit des Verbandes zwischen dem eisenmetallischen Einlegteil und der dieses aufnehmenden Leichtmetallegierung wird noch einmal erheb ich verbessert, wenn die Stege der Einlegteile einen mit Abstand zum Träger verlaufenden verdickten Abschnitt aufweisen.

Eine weiterhin verbesserte Verzahnungswirkung der Bauelemente wird erreicht, wenn zumindest ein Teil der Durchbrüche in den Stegen im Einlegteil zwischen dem Träger und dem verdickten Abschnitt angeordnet ist.

Eine hohe Steifigkeit der gesamten Kurbelwellenlagerung wird erreicht, wenn die Lagerschrauben das eine Einlegteil in sockelförmigen Abschnitten durchdringen, die sich vom Träger ausgehend in Richtung der Lagerverschraubung erstrecken.

Der Verband zwischen Einlegteil und der Leichtmetallegierung läßt sich noch einmal vorteilhaft verbessern, wenn das Einlegteil zumindest an zwei gegenüberliegenden Außenseiten mit einem Verzahnungsprofil versehen ist.

Die sockelförmigen Abschnitte, die von den Lagerverschraubungen durchdrungen werden, haben in vorteilhafter Weise senkrecht zur Verschraubungsrichtung stehende Stirnflächen, um eine gezielte Einleitung der Schraubenkräfte sicherzustellen und um Verschiebungskräfte zwischen den beiden Bauelementen zu verhindern.

Die Einlegteile bestehen aus einem eisenmetallischem Werkstoff, z.B. Grauguß, geschmiedetem Stahl oder auch aus einem Sinterstahl. Die Einlegteile werden im unbearbeiteten Zustand in eine Kokille eingelegt und mit Leichtmetall bzw. der Leichtmetallegierung umgossen. Dabei sind die Einlegteile nach der Endbearbeitung nicht in allen Bereichen umgossen, insbesondere die halbkreisförmigen Träger liegen an ihren Stirnseiten frei.

Weitere Vorteile und vorteilhafte Weiterbildungen der Erfindung ergeben sich aus den Unteransprüchen und der Beschreibung. Ein Ausführungsbeispiel der Erfindung ist in der nachfolgendenden Beschreibung und Zeichnung näher erläutert Letztere zeigt in:

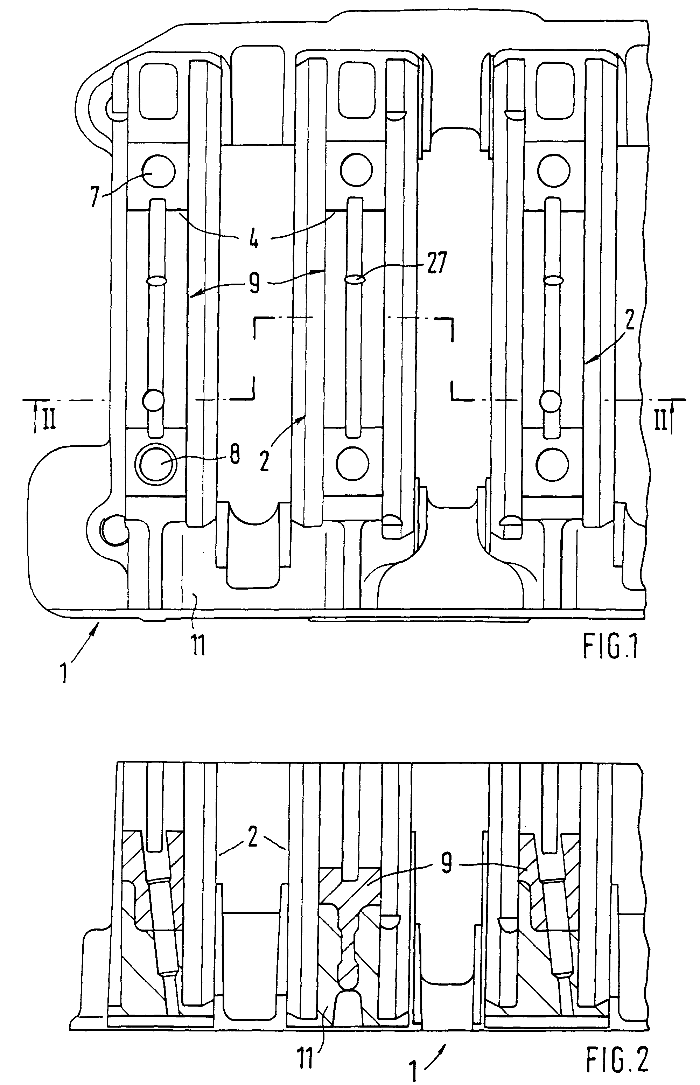

- Fig. 1: eine nur teilweise dargestellte Draufsicht auf eine Hälfte eines Lagergestells mit mehreren Lagerabschnitten,
- Fig. 2: einen Längsschnitt durch das Lagergestell entlang der Linie II-II nach Fig. 1,

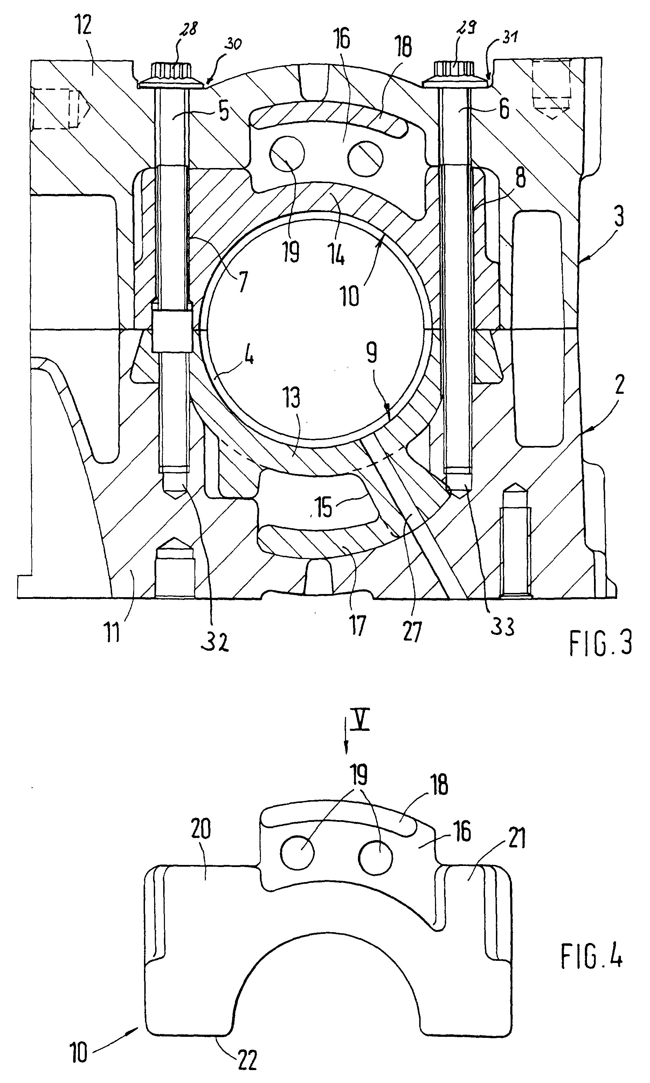

- Fig. 3: einen Querschnitt durch zwei miteinander verbundene, eine Lagerstelle bildende Lagerabschnitte,
- Fig. 4: eine Ansicht eines Einlegteils,

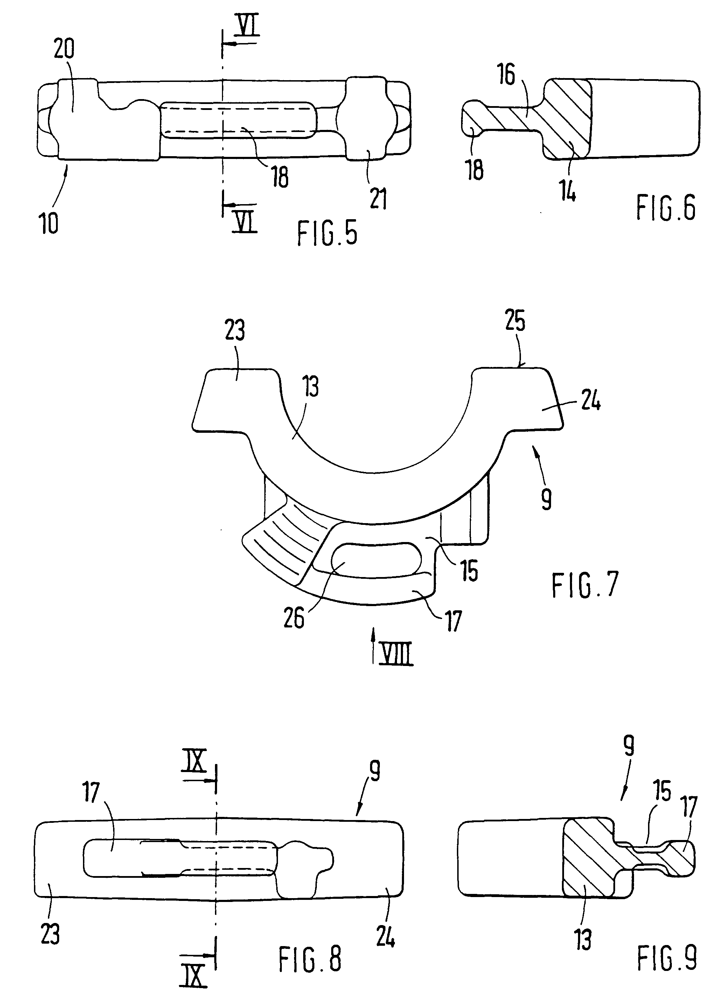

- Fig. 5: eine Draufsicht auf dieses Einlegteil in Pfeilrichtung V nach Fig. 4,
- Fig. 6: einen Querschnitt durch dieses Lagerteil entlang der Linie VI - VI nach Fig. 5,
- Fig. 7: eine Ansicht des zweiten Einlegteiles,
- Fig. 8: eine Draufsicht auf dieses zweite Einlegteil in Pfeilrichtung VIII nach Fig. 7,
- Fig. 9: einen Querschnitt durch dieses zweite Einlegteil entlang der Linie IX - IX nach Fig. 8,

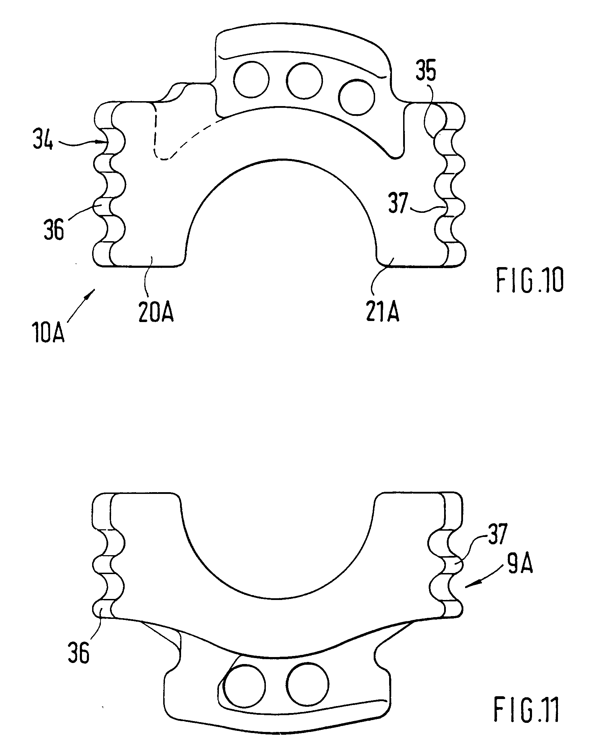

- Fig. 10: eine Ansicht einer Abwandlung des ersten Einlegteils und
- Fig. 11: eine Ansicht einer Abwandlung des zweiten Einlegteils.

Die in diesem Ausführungsbeispiel dargestellte Kurbelwellenlagerung besteht ohne Beschränkung auf diese Ausführungsform aus zwei miteinander verbundenen Lagerbrücken mit einer Vielzahl von Lagerabschnitten, die in das Kurbelgehäuse einer Brennkraftmaschine eingesetzt sind. Jede Lagerbrücke 1 besteht aus einer Vielzahl von hintereinander angeordneten Lagerabschnitten 2, 3 in denen jeweils eine Hälfte einer Lagerbohrung 4 ausgebildet ist, die im zusammengesetzten Zustand jeweils einen Kurbelzapfen der nicht dargestellten Kurbelwelle aufnehmen. Die Verbindung der Lagerabschnitte 2, 3 und damit der beiden Lagerbrücken erfolgt durch Lagerschrauben 5, 6, die in Bohrungen 7, 8 angeordnet sind. Jeder Lagerabschnitt 2, 3 umfaßt ein integriertes Einlegteil 9, 10 aus einem eisenmetallischen Werkstoff, das in ein Umgußteil 11, 12 aus einer Leichtmetallegierung eingebettet ist, das den jeweiligen Lagerabschnitt und die jeweilige Lagerbrücke 1 bildet.

Die Einlegteile 9, 10 bestehen jeweils aus einem halbkreisförmigen Träger 13, 14 in dem der jeweilige Teil der Lagerbohrung 4 ausgebildet ist. Von diesen Trägern 13, 14 geht jeweils ein radial nach außen weisender Steg 15, 16 geringerer Dicke aus, der an seinem radial äußeren Ende einen verdickten Abschnitt 17, 18 aufweist.

Der Steg 16 weist in diesem Ausführungsbeispiel zwei Durchbrüche 19 auf, die nach dem Umgießen mit der Leichtmetallegierung aufgefüllt sind. Das E nlegteil 10 hat weiterhin zwei vom Träger 14 ausgehende sockelförmige Abschnite 20, 21, zwischen denen die Lagerbohrung 4 angeordnet ist und die zur Aufnahme bz *N*. Durchführung der Lagerschrauben 5, 6 dienen. Diese sockelförmigen Abschnitte 20, 21 reichen bis zur Stirnseite 22 des Einlegteils 10.

Das Einlegteil 9 hat zwei vom Träger 13 ausgehende radiale Fortsätze 23, 24, die von den Lagerschrauben 5, 6 durchdrungen werden und sich im Bereich der Stirnseite 25 erstrecken. Diese Fortsätze 23, 24 lassen abgeschrägte Seitenflächen, um einen verbesserten Verband bzw. eine Verzahnung mit dem Umgußteil zu erzielen. Im Steg 15 ist ein als Langloch ausgebildeter Durchbruch 26 ausgebildet. Das Einlegteil 9 ist weiterhin mit einer radial verlaufenden Ölbohrung 27 versehen, die in die Umfangsfläche der Lagerbohrung 4 mündet und sich im Umgußteil 11 des Lagerabschnittes fortsetzt. Diese Ölbohrung dient zur Versorgung der Lagerstelle mit Schmiermittel.

Die Lagerschrauben 5, 6 sind so angeordnet, daß ein Lagerabschnitt vollständig durchdrungen wird, wobei die Schraubenköpfe 28, 29 sich an einer äußeren Schraubfläche 30, 31 des Umgußteils 12 dieses Lagerabschnittes 3 abstützen. Die Lagerschrauben durchdringen dabei das Einlegteil 10 im Bereich der r sockelförmigen Abschnitte 20, 21 und die Fortsätze 23, 24 des Einlegteils 9 und sind in einer das Ende der Lagerbohrung bildenden Sacklochbohrung 32, 33 im Umgußteil 11 des gegenüberliegenden Lagerabschnitt 2 verschraubt.

Die Lagerabschnitte sind nach ihrer Endbearbeitung der Oberflächen so ausgebildet, daß die Stirnseiten der halbkreisförmigen Träger frei liegen, d.h. die Breite der halbkreisförmigen Träger entspricht der Lagerbreite des jeweiligen Lagerabschnittes. Die an die halbkreisförmigen Träger anschließenden Stege haben eine geringere Breite und gehen in die verdickten Abschnitte mit einer Breite über. Die Stege und die verdickten Abschnitte sind jeweils etwa mittig bezogen auf die Lagerbreite angeordnet und vollständig in das Umgußteil eingebettet.

Bei den mit 9A und 10A bezeichneten Abwandlungen der zuvor beschriebenen Einlegteile sind die sockelförmigen Abschnitte 20A, 21A bzw. Fortsätze an ihren Außenseiten 34, 35 mit einem Verzahnungsprofil 36, 37 versehen. Dieses Verzahnungsprofil 36, 37 ist im dargestellten Ausführungsbeispiel wellenförmig ausgebildet, eine andere Formgebung z.B. ein Sägezahnprofil oder eine Rechteckverzahnung ist ohne weiteres möglich. Die Einlegteile 9A und 10A unterscheiden sich darüber hinaus durch die Zahl und Anordnung der Durchbrüche. Weitere Abwandlungen sind ohne weiteres möglich.

## Patentansprüche

1. Kurbelwellenlagerung für eine Brennkraftmaschine mit zwei miteinander durch Lagerschrauben (5, 6) verbundenen Lagerabschnitten (2, 3), wobei jeder Lagerabschnitt ein Einlegteil (9, 9A, 10, 10A) aus einem eisenmetallischen Werkstoff sowie ein aus einer Leichtmetallegierung gegossenes, das jeweilige Einlegteil aufnehmendes Umgußteil (11, 12) aufweist und wobei die Einlegteile (9, 9A, 10, 10A) sich gegeneinander abstützen, jeweils einen halbkreisförmigen Trager (13, 14) aufweisen, in dem der jeweilige Teil einer Lagerbohrung (4) ausgebildet ist und Bohrungen (7, 8) aufweisen, die von den Lagerschrauben (5, 6) durchdrungen sind, **dadurch gekennzeichnet, daß** beide Einlegteile (9, 9A, 10, 10A) aus profilierten Formteilen mit in den Umgußteilen (11, 12) verankerten Stegen (15, 16) bestehen, daß die Stege mit Durchbrüchen (19, 26) und Verdickungen (17, 18) versehen sind und daß die Lagerschrauben (5, 6) sich einerseits an einer äußeren Schraubfläche (30, 31) des Umgußteils (12) des einen Lagerabschnittes (3) abstützen, während sie im Umgußteil (11) des gegenüberliegenden Lagerabschnittes (2) verschraubt sind.

2. Kurbelwellenlagerung nach Anspruch 1, **dadurch gekennzeichnet, daß** die Einlegteile (9, 9A, 10, 10A) zumindest teilweise einen annähernd T-örmigen Querschnitt haben, wobei der halbkreisförmige Träger (13, 14) den Quersteg bildet.

3. Kurbelwellenlagerung nach Anspruch 1 oder 2, **dadurch gekennzeichnet, daß** die Stege der Einlegteile (9, 9A, 10, 10A) einen mit Abstand zum Träger (13, 14) verlaufenden verdickten Abschnitt (17, 18) aufweisen.

4. Kurbelwellenlagerung nach Anspruch 3, **dadurch gekennzeichnet, daß** zumindest ein Teil der Durchbrüche (19, 26) in den Stegen zwischen dem Träger (13, 14) und dem verdickten Abschnitt (17, 18) angeordnet ist.

5. Kurbelwellenlagerung nach einem der vorangehenden Ansprüche, **dadurch gekennzeichnet, daß** einer der Einlegteile (10, 10A) jeweils eine Lagerschraube (5, 6) aufnehmenden sockelförmigen Abschnitte (20, 20A, 21, 21A) aufweist, die sich vom Träger (13, 14) ausgehend in Richtung der Lagerverschraubung erstrecken.

6. Kurbelwellenlagerung nach einem der vorangehenden Ansprüche, **dadurch gekennzeichnet, daß** zwischen den sockelförmigen Abschnitten (20, 20A, 21, 21A) Durchbrüche (19) vorgesehen sind.

7. Kurbelwellenlagerung nach einem der vorangehenden Ansprüche, **dadurch gekennzeichnet, daß** bei mindestens einem der Einlegteile (9, 9A) vom halbkreisförmigen Träger ausgehend parallel zur Stirnseite (25) verlaufende Fortsätze (23, 24) angeformt sind, die von den Lagerschrauben durchdrungen werden.

8. Kurbelwellenlagerung nach einem der vorangehenden Ansprüche, **dadurch gekennzeichnet, daß** die Einlegteile an ihren gegenüberliegenden Außenseiten (34, 35) mit einem Verzahnungsprofil (36, 37) versehen sind.

9. Kurbelwellenlagerung nach einem der vorangehenden Ansprüche, **dadurch gekennzeichnet, daß** die Lagerschrauben (5, 6) in Sacklochbohrungen (32, 33) im Umgußteil (11) des gegenüberliegenden Lagerabschnittes (2) verschraubt sind, die als Verlängerungen der Bohrungen im zugehörigen Einlegteil (9, 9A) ausgebildet sind.

10. Kurbelwellenlagerung nach einem der vorangehenden Ansprüche, **dadurch gekennzeichnet, daß** eine Vielzahl von Lagerabschnitten (2, 3) zu zwei miteinander verbundenen leiterförmigen Lagerbrücken (1) zusammengesetzt sind.

11. Kurbelwellenlagerung nach einem der vorangehenden Ansprüche, **dadurch gekennzeichnet, daß** die Breite der halbkreisförmigen Träger (13, 14) zumindest annähernd der Lagerbreite der jeweiligen Lagerabschnitte entspricht.

12. Kurbelwellenlagerung nach einem der vorangehenden Ansprüche, **dadurch gekennzeichnet, daß** die Breite der verdickten Abschnitte (17, 18) kleiner als die Lagerbreite ist, und daß die verdickten Abschnitte etwa mittig bezogen auf die Lagerbreite in den jeweiligen Lagerabschnitt eingebettet sind.

## Claims

1. A crankshaft bearing for an internal-combustion engine, comprising two bearing portions (2, 3) interconnectec by bearing screws (5, 6), wherein each bearing portion has an insert (9, 9A, 10, 10A) comprising a ferrous metal material and a surrounding casting (11, 12) cast from a light metal alloy and receiving the respective insert, and wherein the inserts (9, 9A, 10, 10A) are supported against one another, each have a semi-circular carrier (13, 14) in which the respective part of a bearing bore (4) is formed, and have bores (7, 8) which are penetrated by the bearing screws (5, 6), **characterised in that** both inserts (9, 9A, 10, 10A) comprise profiled moulded parts with flanges (15, 16) anchored in the surrounding castings (11, 12), **in that** the flanges are provided with openings (19, 26) and thickenings (17, 18) and **in that** the bearing screws (5, 6) are supported at one end against an outer screw surface (30, 31) of the surrounding casting (12) of the one bearing portion (3), whereas they are screwed into the surrounding casting (11) of the opposite bearing portion (2).

2. A crankshaft bearing according to claim 1, character sed in that the inserts (9, 9A, 10, 10A) have an approximately T-shaped cross-section at least in part, the semi-circular carrier (13, 14) forming the crossbar.

3. A crankshaft bearing according to claim 1 or 2, **characterised in that** the flanges of the inserts (9, 9A, 10, 10A) have a thickened portion (17, 18) spaced from the carrier (13, 14).

4. A crankshaft bearing according to claim 3, **characterised in that** the openings (19, 26) in the flanges are arranged at least in part between the carrier (13, 14) and the thickened portion (17, 18).

5. A crankshaft bearing according to any one of the preceding claims, **characterised in that** one of the inserts (10, 1(A) has a socket-type portion (20, 20A, 21, 21A) receiving a bearing screw (5, 6), said portions extending from the carrier (13, 14) towards the bearing screw connection.

6. A crankshaft bearing according to any one of the preceding claims, **characterised in that** openings (19) are provided between the socket-type portions (20, 20A, 21, 21A).

7. A crankshaft bearing according to any one of the preceding claims, **characterised in that** extensions (23, 24), penetrated by the bearing screws and extending from the semi-circular carrier parallel to the end surface (25), are formed on at least one of the inserts (9, 9A).

8. A crankshaft bearing according to any one of the preceding claims, **characterised in that** the inserts are provided with a toothed profile (36, 37) on their opposite outer surfaces (34, 35).

9. A crankshaft bearing according to any one of the preceding claims, **characterised in that** the bearing screws (5, 6] are screwed into blind holes (32, 33) in the surrounding casting (11) of the opposite bearing portion (2), the blind holes (32, 33) being formed as extensions of the bores in the associated insert (9, 9A).

10. A crankshaft bearing according to any one of the preceding claims, **characterised in that** a plurality of bearing portions (2, 3) are combined to form two interconnected ladder-shaped bearing bridges (1).

11. A crankshaft bearing according to any one of the preceding claims, **characterised in that** the width of the semi-circular carrier (13, 14) corresponds at least approximately to the bearing width of the respective bearing portions.

12. A crankshaft bearing according to any one of the preceding claims, **characterised in that** the width of the thickened portions (17, 18) is smaller than the bearing width, and **in that** the thickened portions are embedded approximately centrally in the respective bearing portion relative to the bearing width.

## Revendications

1. Palier de vilebrequin pour un moteur à combustion interne comportant deux portions de palier (2, 3) reliées entre elles par des vis de palier (5, 6), chaque portion de palier comportant une pièce de garniture (9, 9A, 10, 10A) en un matériau en métal ferreux ainsi qu'une pièce d'enrobage (11, 12) coulée en un alliage de métaux légers et recevant la pièce de garniture respective et les pièces de garniture (9, 9A, 10, 10A, prenant appui les unes contre les autres, comportant chacune un support (13, 14) en demi-cercle dans lequel est formée la partie respective d'un trou de palier (4), et présentant des trous (7, 8) qui sont traversés par les vis de palier (5, 6), **caractérisé en ce que** les deux pièces de garniture (9, 9A, 10, 10A) sont constituées de pièces moulées profilées avec des entretoises (15, 16) ancrées dans les pièces d'enrobage (11, 12), **en ce que** les entretoises sont pourvues d'ajours (19, 26) et de surépaisseurs (17, 18) et **en ce que** les vis de palier (5, 6) prennent appui d'une part contre une surface de vis extérieure (30, 31) de la pièce d'enrobage (12) d'une portion de palier (3), tandis qu'elles sont vissées dans la pièce d'enrobage (11) de la portion de palier (2) opposée.

2. Palier de vilebrequin selon la revendication 1, **caractérisé en ce que** les pièces de garniture (9, 9A, 10, 10A) présentent au moins partiellement une section transversale approximativement en T, le support (13, 14) en forme de demi-cercle formant la branche transversale.

3. Palier de vilebrequin selon la revendication 1 ou 2, **caractérisé en ce que** les entretoises des pièces de garniture (9, 9A, 10, 10A) présentent une portion (17, 18) surépaissie, qui s'étend à distance du support (13, 14).

4. Palier de vilebrequin selon la revendication 3, **caractérisé en ce qu'**au moins une partie des ajours (19, 26) est disposée dans les entretoises entre le support (13, 14) et la portion surépaissie (17, 18).

5. Palier de vilebrequin selon l'une des revendications précédentes, **caractérisée en ce que** l'une des pièces de garniture (10, 10A) comporte des portions (20, 20A, 21, 21A) en forme de socle qui reçoivent une vis de palier (5, 6) et qui s'étendent, depuis le support (13, 14), en direction du vissage de palier.

6. Palier de vilebrequin selon l'une des revendications précédentes, **caractérisé en ce que** des ajours (19) sont prévus entre es portions (20, 20A, 21, 21A) en forme de socle.

7. Palier de vilebrequin selon l'une des revendications précédentes, **caractérisé en ce que** dans au moins l'une des pièces de garniture (9, 9A) sont formés des prolongements (23, 24) qui, partant du sup )ort en forme de demi-cercle, s'étendent parallèlement au côté frontal (25) et qui sont traversés par les vis de palier.

8. Palier de vilebrequin selon l'une des revendications précédentes, **caractérisé en ce que** les pièces de garniture présentent un profil de denture (36, 37), sur leurs côtés extérieurs (34, 35) opposés.

9. Palier de vilebrequin selon l'une des revendications précédentes, **caractérisé en ce que** les vis de palier (5, 6) sont vissées dans des trous borgnes (32, 33) de la pièce d'enrobage (11) de la portion de palier (2) opposée, lesquels trous borgnes sont réalisés en tant que prolongement des trous de la pièce de garniture (9, 9A) correspondante.

10. Palier de vilebrequin selon l'une des revendications précédentes, **caractérisé en ce qu'**un grand nombre de portions de palier (2, 3) sont assemblées pour donner deux ponts de palier (1) en forme de conducteurs reliés entre eux.

11. Palier de vilebrequin selon l'une des revendications précédentes, **caractérisé en ce que** la largeur des supports (13, 14) en forme de demi-cercle correspond au moins approximativement à la largeur de palier des portions de palier respectives.

12. Palier de vilebrequin selon l'une des revendications précédentes, **caractérisé en ce que** la largeur des portions surépaissies (17, 18) est inférieure à la largeur de palier, et **en ce que** les portions surépaissies sont noyées dans la portion de palier respective, à peu près au m lieu par rapport à la largeur de palier.
